# EUROPEAN PATENT SPECIFICATION

(11) **EP 3 897 112 B1**
(45) Date of publication and mention of the grant of the patent: **15.11.2023**
(21) Application number: 19820900.9
(22) Date of filing: 03.12.2019
(51) Int. Cl.: A01K 15/02, A01K 1/01, A01K 5/00

(54) **VEHICLE, SYSTEM, AND METHOD FOR PERFORMING AN ANIMAL-RELATED ACTION**
FAHRZEUG, SYSTEM UND VERFAHREN ZUM AUSÜBEN EINER TIERBEZOGENEN AKTION
VÉHICULE, SYSTÈME ET MÉTHODE POUR RÉALISER UNE ACTION RELATIVE À UN ANIMAL

(30) Priority: 18.12.2018 NL 2022240
(43) Date of publication of application: 27.10.2021
(73) Proprietor: Lely Patent N.V., 3147 PB Maassluis (NL)
(72) Inventor: VAN MEURS, Matthew, 3147 PB Maassluis (NL); 'T MANNETJE, Leon, 3147 PB Maassluis (NL)
(74) Representative: Octrooibureau Van der Lely N.V.
(86) International application number: PCT/NL2019/050802
(87) International publication number: WO 2020/130805

(56) References cited:
- WO-A1-00/70941
- DE-A1- 3 328 504
- DE-A1- 3 438 612
- US-A1- 2011 185 975

## Description

The invention relates to a vehicle for performing an animal-related operation, in particular with cows, such as dairy cows or meat cows. For example, the vehicle according to the invention is an autonomous vehicle which is used with an automatic feeding system for feeding animals.

The Lely Vector ^{®} automatic feeding system is known. This feeding system comprises an autonomous vehicle for depositing feed along a feeding fence in an animal shed. The animals which are kept in a shed space behind the feeding fence, are attracted by fresh feed. While the feed is being deposited, the animals tend to stick their heads through the feeding fence while the autonomous vehicle drives past. In this case, there is a risk that the animals come into contact with the autonomous vehicle, which could cause failure of and damage to the autonomous vehicle. In order to condition the animals not to touch the autonomous vehicle, the autonomous vehicle is provided with an electrical shock device. If an animal comes into contact with the electrical shock device, the animal receives an electrical shock which, although harmless, is sufficiently unpleasant to teach the animal to avoid contact with the autonomous vehicle. However, this shock device is not sufficiently reliable, i.e. in practice there are instances of animals bumping into the autonomous vehicle moving past, but not receiving an electrical shock. This makes it more difficult to teach the animals to leave the autonomous vehicle alone.

DE 33 28 504 A1 discloses a feeding device comprising a feed container, a feed bowl and a rail track. The feed container can be moved along the rail track. The feed bowl is suspended from the feed container by means of chains. A cow can insert her head into a feeding zone of the feed bowl. The feeding zone is delimited by contact rods provided with electrodes.

It is an object of the invention to provide a vehicle for performing an animal-related operation, in particular for use with cows, in which the reliability of the electrical shock device is improved.

According to the invention, this object is achieved by a vehicle according to claim 1 for performing an animal-related operation, in particular for use with cows, such as dairy cows or meat cows, wherein the vehicle is delimited by an outer side, and wherein the vehicle comprises an electrical shock device for emitting an electrical shock to an animal, and wherein the shock device is provided with at least one pair of elongate, electrically conductive strips which run substantially parallel to each other so as to leave clear an electrically insulating intermediate space in between and which extend at least along a portion of the outer side of the vehicle, wherein the strips of the or each pair of mutually parallel strips each have a shape comprising first parts which extend in a first direction which corresponds to the longitudinal direction of the elongate, mutually parallel strips, and comprising second parts which extend transversely, preferably substantially perpendicularly, with respect to said first direction, and wherein the shock device furthermore comprises an electrical voltage source which is electrically connected to said strips in such a way, i.e. to both strips of the pair of mutually parallel, electrically conductive strips, that an electrically closed circuit is formed when said strips are electrically connected across the intermediate space, such as when both strips are touched by an animal. The outer side of the vehicle is determined by portions of the vehicle which are accessible from the outside and/or can be touched by animals, in particular the head of a cow approaching the vehicle from the side or obliquely from the side in an upward or downward motion. In this patent application, the shape of the strips of the or each pair of mutually parallel strips comprising first parts which extend in a first direction which corresponds to the longitudinal direction of the elongate, mutually parallel strips, and comprising second parts which extend transversely, preferably substantially perpendicularly, with respect to said first direction, also referred to by the term "zigzag-shaped". Due to the fact that the elongate, mutually parallel strips according to the invention are zigzag-shaped, it is virtually impossible for an animal to touch the strips and not receive an electrical shock. For example, it is virtually impossible for an animal to only touch one of the strips. Thus, the reliability of the electrical shock device according to the invention is greatly improved.

In an embodiment according to the invention, the pair of mutually parallel strips runs substantially horizontally on the outer side of the vehicle. According to the invention, it is also possible that the elongate strips, viewed in their longitudinal direction, run along a substantially straight line. In this case, the first parts of each elongate strip, which extend in the first direction which corresponds to the longitudinal direction of this strip, may be in a straight line, such as with a block-shaped strip. Such strips are easy to produce and easy to fit to the vehicle.

According to the invention, it is possible for the pair of mutually parallel strips to be fitted to an electrically conductive, earthed component of the vehicle, wherein said strips extend substantially above one another, and wherein the electrical voltage source has a cathode and an anode, wherein the anode is electrically connected to the bottom strip and the cathode is electrically connected to the top strip. According to the invention, the vehicle may be earthed, for example due to the fact that all electrically conductive components of the vehicle, in particular the metal components, are connected to an earth of a switch box of the vehicle. In this preferred embodiment, if dirt, such as feed, remains behind on the top strip and the strips are attached to an electrically conductive, earthed component of the vehicle, this does not result in a short circuit, as said top strip is not electrically connected to the anode, but rather to the cathode of the electrical voltage source. This is advantageous for the operation and safety of the vehicle.

According to the invention, the pair of mutually parallel strips is arranged at a distance above a floor, wherein said strips extend substantially above one another, and wherein the strips, viewed in cross section, each have a top portion with a substantially vertical contact surface, which faces outwards, and a bottom portion with a substantially horizontal contact surface, which faces downwards. According to the invention, the bottom portion of each strip extends inwards with respect to the top portion of said strip. The vertical contact surfaces of the top portions of the strips are configured to emit an electrical shock when an animal laterally touches the outer side of the vehicle. If an animal moves its head upwards from under the strips, the animal will also receive an electrical shock by touching the horizontal contact surfaces of the bottom portions of the strips. The reliability of the electrical shock device according to the invention is thus very high.

The strips are formed, for example, by thin-walled metal strips. In this case, the top and bottom portion of each strip may be formed by bending said strip about a bend line which substantially extends in a longitudinal direction of the elongate strip. The bend line is preferably straight. These strips are therefore easy to produce.

In an embodiment according to the invention, the shock device comprises a plurality of pairs of elongate, electrically conductive strips, which run substantially parallel to each other so as to leave clear an electrically insulating intermediate space in between, wherein each pair of mutually parallel strips extends at least along a portion of the outer side of the vehicle, and wherein the electrical voltage source is electrically connected to each pair of mutually parallel strips, i.e. to both strips or each pair of mutually parallel, electrically conductive strips, in such a way that an electrically closed circuit is formed when said strips are electrically connected across the intermediate space, such as when said strips are touched by an animal. In this case, the various pairs of mutually parallel strips are each fed by the electrical voltage source independently from one another. This ensures reliable operation of all pairs of mutually parallel strips. In particular, the operation does not depend on a possible electrical connection between the various pairs of mutually parallel strips.

Preferably, the strips of each pair of the plurality of pairs of mutually parallel strips have a shape comprising first parts which extend in a first direction which corresponds to the longitudinal direction of the elongate, mutually parallel strips of said pair, and comprising second parts which extend transversely, preferably substantially perpendicularly, with respect to said first direction. In other words, each of the plurality of pairs of elongate, electrically conductive strips is preferably designed as zigzag-shaped.

In this case, it is preferable, according to the invention, for the pairs of mutually parallel strips to be arranged on the outer side of the vehicle in such a way that said pairs of mutually parallel strips collectively extend substantially completely from a front side to a rear side of the vehicle, i.e. substantially completely along a longitudinal side of the vehicle, and preferably run substantially completely around the vehicle. In this case, the various pairs of mutually parallel strips are attached to the vehicle at such a small distance from each other, i.e. substantially adjoining each other, that the vehicle is provided with shock means substantially completely on one or both of its sides. As a result thereof, the animals will receive an electrical shock upon virtually every possible contact with the vehicle, which very quickly and efficiently conditions the animals to leave the vehicle in peace.

According to the invention, it is possible for at least one of the pairs of mutually parallel strips to extend substantially vertically on the outer side of the vehicle. The vertical pair of strips is fitted, for example, around a vertical bar of a safety bumper of the vehicle and/or to other components of the vehicle which are accessible to an animal which is situated, for example, behind a feeding fence along which the vehicle travels.

As described above, the strips of the or each pair of mutually parallel strips each have a shape comprising first parts which extend in a first direction which corresponds to the longitudinal direction of the elongate strips, and comprising second parts which extend transversely, preferably substantially perpendicularly, with respect to said first direction. Such a shape of the strips according to the invention may be configured in different ways. The strips are, for example, substantially block-shaped, such as the strips have the shape of a square wave or pulse. In this case, it is preferable that the distance between adjoining second parts of each strip is less than 40 mm, preferably less than 30 mm, such as 20 mm or even less. Surprisingly, it has been found in practice that by using such strips, a very high reliability of the electrical shock device is achieved, while the strips are still easy to produce.

In an embodiment according to the invention, the intermediate space between the strips of the or each pair of mutually parallel strips is formed by an air gap. The electrical voltage source is configured to generate a predetermined difference in voltage between the strips of the or each pair of mutually parallel strips. The difference in voltage is chosen, for example, to emit an electrical shock having an energy of 0.01-1 Joule, such as 0.015 Joule. The width of the air gap is adapted to the difference in voltage in such a way that no flashover across the air gap is produced. The air gap is preferably at least 10 mm wide.

In an embodiment according to the invention, the vehicle is autonomous and/or unmanned. For example, the vehicle comprises a plurality of wheels, by means of which the vehicle is movable across a floor, a drive and steering system for driving and steering the vehicle, wherein the drive and steering system is provided with at least one electrical drive motor, and an electronic control system which is connected to the driving and steering system for controlling it. Preferably, the vehicle comprises a battery system for storing electrical energy, wherein the battery system is connected to the driving and steering system and the control system. By controlling the driving and steering system, it is possible to determine the speed and the direction of the movement of the vehicle. By means of the control system, the vehicle is able to follow a route autonomously. However, it is also possible for the autonomous vehicle to be guided along a route by means of a guide rail. In this case, the vehicle may be suspended from the guide rail, for example.

The vehicle according to the invention may be configured to perform various animal-related operations. In particular, the vehicle is adapted for pushing feed in the direction of a feeding fence across a floor and/or for the automatic feeding of animals, in particular by automatically dispensing feed along a feeding fence in an animal shed. However, the vehicle may also be configured to clean a floor, such as the animal-shed floor on which the animals walk, or for yet other animal-related operations.

The invention also relates to a system for performing an animal-related operation, comprising a shed space for keeping animals, which shed space comprises a feeding fence, in particular wherein the shed space is at least partly delimited by the feeding fence, a feeding alley which extends along the feeding fence on the side of the feeding fence which is situated opposite the shed space, and a vehicle as described above.

The invention furthermore relates to a method for performing an animal-related operation, comprising emitting an electrical shock to an animal which comes into contact with the or each pair of mutually parallel strips of the shock device of a vehicle as described above.

The invention will now be explained in more detail by means of the accompanying drawing, in which:
Figure 1 shows a diagrammatic top view of a system according to the invention.
Figure 2 shows a perspective view of a vehicle of the system illustrated in Figure 1.
Figure 3 shows a perspective view of an electrical shock device of the vehicle illustrated in Figure 2.
Figures 4a, 4b, 4c show views of a first pair of mutually parallel, electrically conductive strips of the electrical shock device illustrated in Figure 3.
Figures 5a and 5b show views of a second pair of mutually parallel, electrically conductive strips of the electrical shock device illustrated in Figure 3.

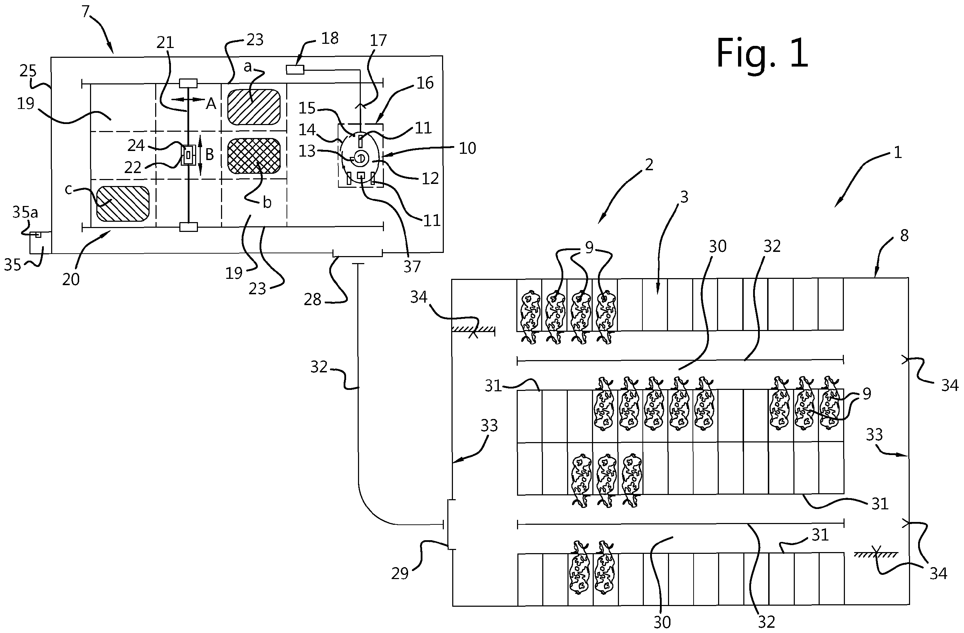

The system according to the invention illustrated in Figure 1 forms an automatic feeding system 1 for feeding animals, in particular cows, such as dairy cows or meat cows. The feeding system 1 is arranged in an operational area 2. The feeding system 1 comprises a feed storage system 7 containing feed types a, b, c, an animal shed 8 containing animals 9, and an autonomous vehicle 10 for feeding the animals 9 using feed from the feed storage system 7. Obviously, the feed storage system 7 may also contain more than the three feed types a, b, c shown in Figure 1. In addition, the operational area 2 may optionally also contain a dwelling, one or more further animal sheds, other sheds and other buildings (not shown).

In this exemplary embodiment, the autonomous vehicle 10 for feeding the animals 9 is configured as a self-propelled feed wagon. Obviously, it is possible, according to the invention, for the feeding system 1 to comprise more than one autonomous feed wagon 10, in particular two autonomous feed wagons 10 (not shown). By means of wheels 11, the feed wagon 10 is movable across a floor, farm yard or other ground surface. The feed wagon 10 comprises a container 12 for accommodating feed and a mixing device 13 for cutting and/or mixing said feed. A dispensing device 14 is provided in order to dispense the feed from the container 12. The dispensing device 14 comprises, for example, a door which is displaceable between a closed and an open position.

The feed wagon 10 is autonomously displaceable by means of a driving and steering system for driving and steering the feed wagon 10 (not shown). The driving and steering system of the feed wagon 10 is controllable by means of an electronic control unit 15 of the feed wagon 10. In this exemplary embodiment, the driving and steering system comprises in each case an electrical drive motor (not shown) for each rear wheel 11. The electrical drive motors of the rear wheels 11 are controllable independently from one another. By controlling the rotary speed of the rear wheels 11, the feed wagon 10 can travel forwards or backwards in a straight line or make a bend.

The driving and steering system comprises a battery system for storing electrical energy (not shown). The battery system is connected to the electrical drive motors. In Figure 1, the feed wagon 10 is situated at a feed loading area 16, at which the container 12 of the feed wagon 10 is filled with feed. The feed loading area 16 comprises a charging point 17 of a charging system 18 for charging the battery system of the feed wagon 10. The feed loading area 16 therefore also acts as a charging point. The control unit 15 of the feed wagon 10 is configured to control the mixing device 13 in such a way that the mixing device 13 mixes the feed contained in the container 12 while the feed wagon 10 is connected to the charging point 17 and the battery system of the feed wagon 10 is charged by means of the charging system 18.

In this exemplary embodiment, the feed storage system 7 comprises a feed kitchen. The feed kitchen comprises a number of feed loading areas 19 to accommodate the feed types a, b, c and optionally further feed types (not shown). The feed loading areas 19 are separated from each other - the feed loading areas 19 are, for example, formed by delineated spaces on a floor, on which a silage block or a pressed bale is situated. Also, one or more of the feed loading areas 19 may comprise a trough for accommodating bulk feed, such as maize, potatoes or beets.

A feed-loading device 20 is provided for transferring feed from the feed storage system 7 to the container 12 of the feed wagon 10 if the feed wagon 10 is positioned at the feed loading area 16. In this exemplary embodiment, the feed-loading device 20 comprises a movable carrying rail 21 which is displaceably (see arrow A) arranged on two fixed carrying rails 23 which are arranged mutually parallel to and spaced apart from each other. The movable carrying rail 21 comprises a trolley 22 which is displaceable along the former (see arrow B). The trolley 22 is provided with a vertically displaceable grab 24 to grab feed from the feed storage areas 19. The grab 24 suspended from the trolley can be displaced in a substantially horizontal plane so as to be situated above each of the feed storage areas 19.

After the grab 24 has taken an amount of feed from one of the feed storage areas 19, said feed can be displaced by the grab 24 until it is situated over the container 12 of the feed wagon 10 and then be dropped into the container 12. By transferring several feed types to the container 12 of the feed wagon 10, a mixed feed batch of feed types according to a desired ration is formed in the container 12, i.e. a mixed feed batch (kg) of feed types in a desired ratio. Incidentally, the feed-loading device could also be incorporated in the feed wagon 10. In this case, the feed-loading device of the feed wagon 10 loads the desired amount of feed of the desired composition into the container 12.

Obviously, the feed storage system 7 may also be configured differently. Instead of or in addition to the feed storage areas 19 shown in Figure 1, the feed storage system 7 may comprise one or more other feed storage devices, such as a driven conveyor belt for holding compressed bales in combination with a releasing device for releasing feed from a bale, for example a cutter or blade, and/or a trough for bulk feed comprising an auger for the metered discharge of the feed, and/or a tower silo and/or something else. In this case, the feed-loading device may be provided with one or more driven conveyor belts for displacing the feed from the or each feed storage device to the container 12 of the feed wagon 10.

The feed storage system 7 is surrounded by a safety fence 25. A pass-through door 28 for the feed wagon 10 is provided in the safety fence 25. The feed wagon 10 is able to enter and exit the feed storage system 7 via the pass-through door 28. The feeding system 1 may comprise further safety features in addition to the safety fence 25, for example an emergency stop, by means of which the feed wagon 10 and/or the feed-loading device 20 is immediately stopped. In this case, for example, an alarm may sound and/or a message may be sent to a user, such as an e-mail or text message.

The animal shed 8 comprises a door opening 29, via which the feed wagon 10 can enter and exit the animal shed 8. The door opening 29 is closable by means of a shed door which is preferably openable automatically. In this exemplary embodiment, the animal shed 8 has two feeding alleys 30. Obviously, more or fewer feeding alleys may be provided. In this exemplary embodiment, every feeding alley 30 is delimited on either side by a feeding fence 31. Each feeding alley 30 comprises a plurality of feeding areas for feeding the animals 9. Viewed from the feeding alley 30, the feeding areas are situated behind the feeding fence 31, in a shed space 3 in which the animals 9 are being kept. The feeding areas extend substantially transversely with respect to the feeding alley 30. The animals 19 are positioned with their head turned towards the feeding alley 30 and are able to put their head through the feeding fence 31 in order to eat feed which has been deposited along the feeding fence 31 by the feed wagon 10.

The feeding fences 31 in the animal shed 8 are situated at a distance from the feed loading area 16 of the feed storage system 7. Each of the feeding fences 31 is reachable by the feed wagon 10 from the feed loading area 16. Various beacons are arranged in the operational area 2. In this exemplary embodiment, the beacons are formed by strips 32 which are disposed in or on a floor or another ground surface, walls 33 of the animal shed 8 and impact points 34. The feed wagon 10 comprises a sensor system (not shown) which is configured to cooperate with the beacons 32, 33, 34. In addition, the feed wagon 10 comprises a gyroscope (not shown) in order to travel straight ahead over a predetermined distance. The gyroscope is connected to the control unit 15 of the feed wagon 10.

The feeding system 1 comprises a control system 35 with a memory 35a in which data are stored, such as navigation data, ration data and operating data. The navigation data comprise beacon data from the beacons 32, 33, 34. On the basis of the navigation data, the feed wagon 10 is able to travel from the feed loading area 16 to and through the animal shed 8 along various routes. The ration data comprise a plurality of rations for the animals 9. Each ration is determined by a total amount of feed and the composition thereof, for example the total amount of feed in kg and the recipe (ratio between various types of feed) in kg per type of feed. The operating data comprise, for example, operating data for operating the dispensing device 14 of the feed wagon 10.

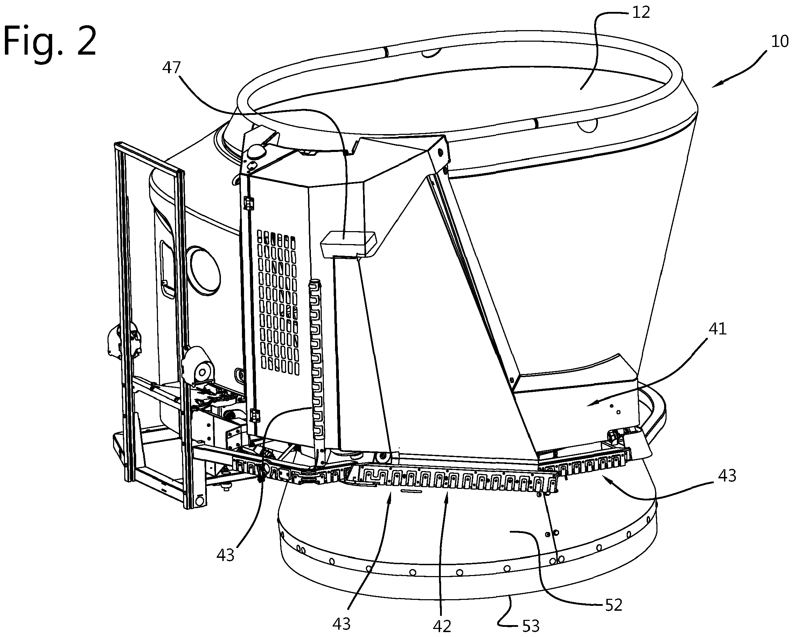

The feed wagon 10 is illustrated in detail in Figure 2. The feed wagon 10 comprises a peripheral skirt 52 with an outer surface for displacing and/or pushing the feed in the direction of the feeding fence 31 while the feed wagon 10 travels forwards. The skirt 52 is rotatable about an axis of rotation and has a peripheral bottom edge 53 which extends in a plane which runs at an angle with respect to the floor. At its lowest point, the bottom edge 53 makes contact with the floor and/or the feed situated thereon, so that the skirt 52 is rotatably driven when the feed wagon 10 moves.

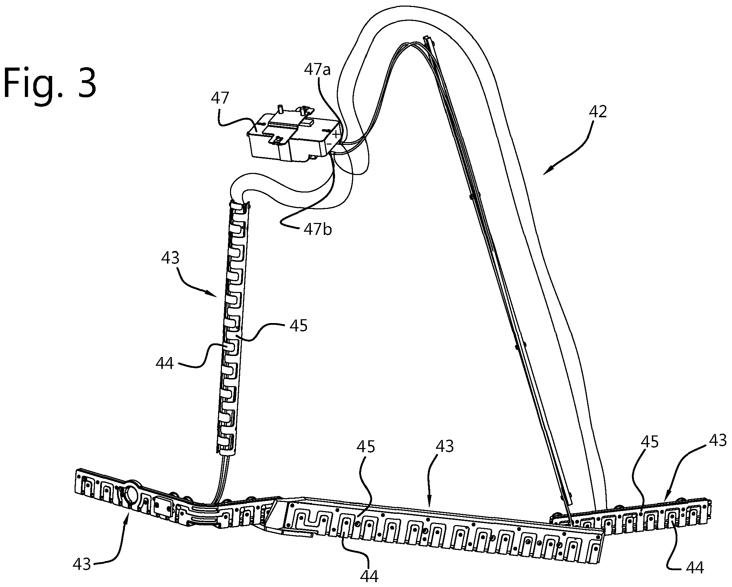

The feed wagon 10 is delimited by an outer side 41. The outer side 41 of the feed wagon 10 is determined by the portions of the feed wagon 10 which can be touched by the animals 9 behind the feeding fence 31 when the feed wagon 10 travels past. According to the invention, the feed wagon 10 comprises an electrical shock device 42 for emitting an electrical shock to an animal (see also Figure 3).

In this exemplary embodiment, the shock device 42 comprises a plurality of pairs 43 of elongate, electrically conductive strips 44, 45, which run substantially parallel to each other so as to leave clear an electrically insulating intermediate space 46 in between. The strips 44, 45 are formed by thin-walled, metal strips. In this exemplary embodiment, the intermediate space 46 between each pair of mutually parallel strips is formed by an air gap.

Each pair 43 of mutually parallel strips 44, 45 runs at least along a portion of the outer side 41 of the feed wagon 10. In this exemplary embodiment, the pairs 43 of mutually parallel strips 44, 45 are arranged in such a way that said pairs 43 of mutually parallel strips 44, 45 collectively extend substantially completely along both longitudinal sides of the feed wagon 10. Viewed in their longitudinal direction, the elongate strips 44, 45 run substantially along a straight line. Such strips are easy to produce.

The shock device 42 comprises an electrical voltage source 47. The voltage source 47 is electrically connected to each pair 43 of mutually parallel strips 44, 45, i.e. to both strips 44, 45 of each pair of electrically conductive strips. When said strips 44, 45 are electrically connected across the air gap 46, such as when said strips 44, 45 are touched by an animal 9, an electrically closed circuit is produced and the animal 9 receives an electrical shock. Due to the fact that the various pairs 43 of mutually parallel strips 44, 45 are each independently supplied with power by the voltage source 47, it is ensured that each pair 43 of mutually parallel strips 44, 45 is live.

The voltage source 47 is configured to generate a predetermined difference in voltage between each pair 43 of mutually parallel strips 44, 45. The difference in voltage is chosen, for example, to emit an electrical shock with an energy of 0.01-1 Joule, such as 0.015 Joule. Such a shock is smaller than, for example, the electrical shock of an electrified wire. The width of the air gap 46 is adapted to the difference in voltage in such a way that no flashover across the air gap 46 is produced. The air gap 46 is preferably at least 10 mm wide.

All electrically conductive components of the feed wagon 10 are connected to an earth of a switch box of the feed wagon 10. The pairs 43 of mutually parallel strips 44, 45 are attached to electrically conductive, earthed components of the feed wagon 10, in particular metal suspension brackets which are disposed on the metal undercarriage of the feed wagon 10.

As is illustrated in Figures 2 and 3, a number of pairs 43 of mutually parallel strips 44, 45 run substantially horizontally at a distance above the floor on which the feed wagon 10 travels. Each pair 43 of mutually parallel strips 44, 45 comprises a bottom strip 44 and a top strip 45. The voltage source 47 has a cathode 47a and an anode 47b, which are illustrated diagrammatically in Figure 3. The anode 47b is electrically connected to the bottom strip 44, whereas the cathode 47a is electrically connected to the top strip 45. Due to the fact that the top strip 45 is not electrically connected to the anode 47b, but to the cathode 47a of the voltage source 47, no short circuit is produced if dirt, such as feed, remains behind on the top strip 45. This is advantageous for the operation and safety of the feed wagon 10.

The feed wagon 10 is fitted with a safety bumper comprising two vertical bars, one bar of which is visible in Figure 2. These vertical bars form components which are also touchable by the animals 9 from behind the feeding fence 31 when the feed wagon 10 travels past. In this exemplary embodiment, these vertical bars are also provided with in each case one pair 43 of mutually parallel strips 44, 45.

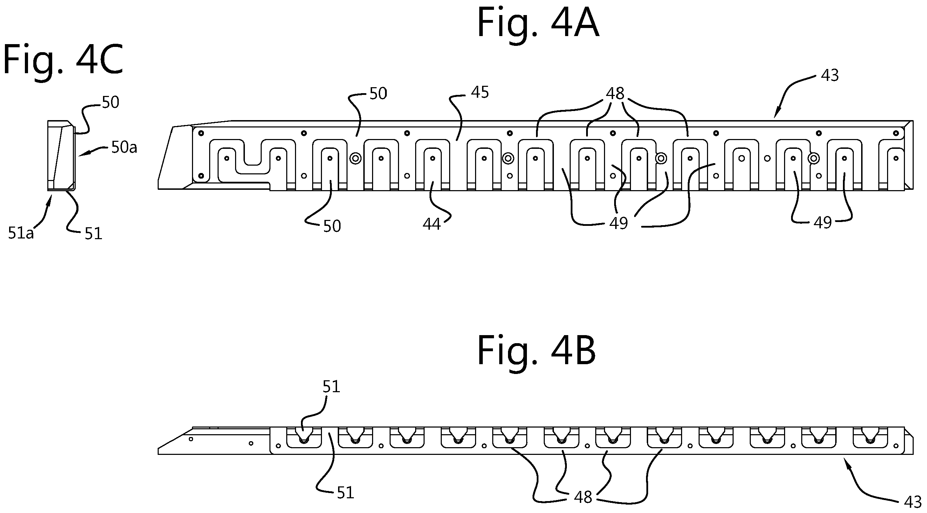

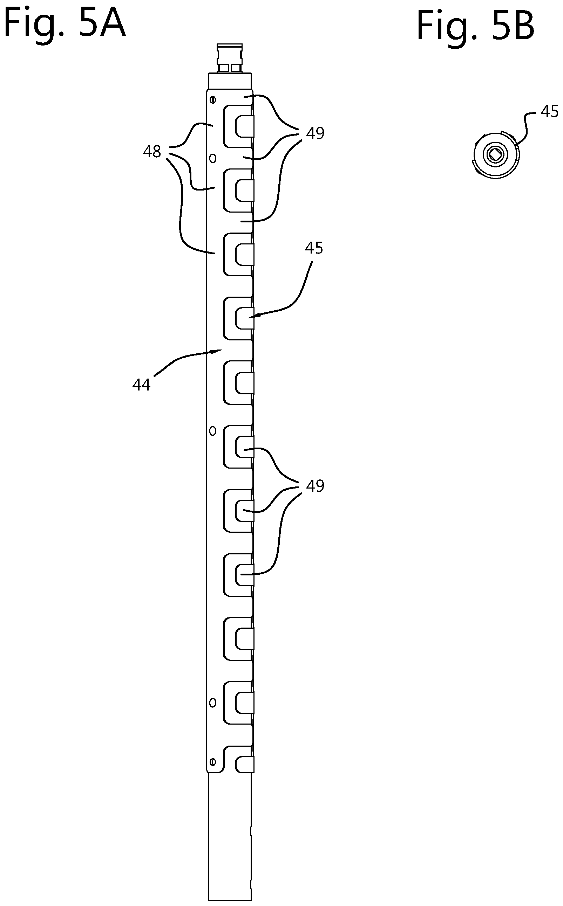

The elongate, mutually parallel strips 44, 45 each have a shape comprising first parts 48 which extend in a first direction which corresponds to the longitudinal direction of the elongate strips 44, 45, and comprising second parts 49 which extend substantially perpendicularly with respect to said first direction. As a result thereof, it is virtually impossible for an animal 9 to touch a pair 43 of mutually parallel strips 44, 45 and not receive an electrical shock. As is illustrated most clearly in Figures 4a, 4b, 4c and Figures 5a, 5b, each pair 43 of mutually parallel strips 44, 45 in this exemplary embodiment is substantially block-shaped. In this exemplary embodiment, the distance d between adjoining second parts 49 of each strip 44, 45 is approximately 20 mm.

The mutually parallel strips 44, 45 which are disposed on the feed wagon 10 substantially horizontally at a distance above the floor each comprise, viewed in cross section, a top portion 50 with a substantially vertical contact surface 50a which faces outwards, and a bottom portion 51 with a substantially horizontal contact surface 51a which faces downwards. The bottom portion 51 of each strip 44, 45 is bent inwards with respect to the top portion 50 of said strip 44, 45. The vertical contact surfaces 50a of the top portions 50 of the strips 44, 45 are designed to emit an electrical shock when an animal 9 laterally touches them. If an animal 9 moves its head upwards from under the strips 44, 45, the animal 9 will also receive an electrical shock by touching the horizontal contact surfaces 51a of the bottom portions 51 of the strips 44, 45.

The invention is not limited to the exemplary embodiment illustrated in the figures. The person skilled in the art may apply various modifications which fall within the scope of the invention. Instead of the above-described autonomous feed wagon 10, the vehicle according to the invention may be designed for pushing feed across a floor in the direction of a feeding fence. In that case, the vehicle may, for example, comprise the above-described rotating skirt 52. The vehicle according to the invention may also be designed for cleaning a floor, such as the animal-shed floor on which the animals walk, or for yet other animal-related operations.

## Claims

1. Vehicle for performing an animal-related operation, in particular for use with cows, wherein the vehicle (10) is delimited by an outer side (41), and wherein the vehicle (10) comprises an electrical shock device (47) for emitting an electrical shock to an animal (9), wherein the shock device comprises:
- at least one pair (43) of elongate, electrically conductive strips (44, 45) which run substantially parallel to each other so as to leave clear an electrically insulating intermediate space (46) in between and which extend at least along a portion of the outer side (41) of the vehicle (10), wherein the strips (44, 45) of the or each pair (43) of mutually parallel strips (44, 45) each have a shape comprising first parts (48) which extend in a first direction which corresponds to the longitudinal direction of the elongate, mutually parallel strips (44, 45), and comprising second parts (49) which extend transversely, preferably substantially perpendicularly, with respect to said first direction, and
- an electrical voltage source (47) which is electrically connected to said strips (44, 45) in such a way that an electrically closed circuit is formed when said strips (44, 45) are electrically connected across the intermediate space (46), such as when both strips (44, 45) are touched by an animal (9)
wherein the pair (43) of mutually parallel strips (44, 45) is arranged at a distance above a floor, **characterised in that** said strips (44, 45) extend substantially above one another, and wherein the strips (44, 45), viewed in cross section, each have a top portion (50) with a substantially vertical contact surface (50a), which faces outwards and a bottom portion (51) with a substantially horizontal contact surface (51a), which faces downwards, and wherein the bottom portion (51) of each strip (44, 45) extends inwards with respect to the top portion (50) of said strip (44, 45).

2. Vehicle according to Claim 1, wherein the pair (43) of mutually parallel strips (44, 45) extends substantially horizontally on the outer side (41) of the vehicle (10).

3. Vehicle according to Claim 1 or 2, wherein the pair (43) of mutually parallel strips (44, 45) is fitted to an electrically conductive, earthed component of the vehicle (10), and wherein said strips (44, 45) extend substantially above one another, and wherein the electrical voltage source (47) has a cathode (47a) and an anode (47b), wherein the anode (47b) is electrically connected to the bottom strip (44) and the cathode (47a) is electrically connected to the top strip (45).

4. Vehicle according to one or more of the preceding claims, wherein the shock device is provided with a plurality of pairs (43) of elongate, electrically conductive strips (44, 45), which run substantially parallel to each other so as to leave clear an electrically insulating intermediate space (46) in between, and wherein each pair (43) of mutually parallel strips (44, 45) extends at least along a portion of the outer side (41) of the vehicle (10), and wherein the electrical voltage source (47) is electrically connected to each pair (43) of mutually parallel strips (44, 45) in such a way that an electrically closed circuit is formed when said strips (44, 45) are electrically connected across the intermediate space (46), such as when said strips (44, 45) are touched by an animal (9).

5. Vehicle according to Claim 4, wherein the pairs (43) of mutually parallel strips (44, 45) are arranged on the outer side (41) of the vehicle (10) in such a way that said pairs (43) of mutually parallel strips (44, 45) collectively extend substantially completely from a front side to a rear side of the vehicle (10).

6. Vehicle according to Claim 4 or 5, wherein the shock device comprises at least one pair (43) of mutually parallel strips (44, 45) which extends substantially vertically on the outer side (41) of the vehicle (10).

7. Vehicle according to one or more of the preceding claims, wherein the strips (44, 45) of the or each pair (43) of mutually parallel strips (44, 45) are each substantially block-shaped.

8. Vehicle according to one or more of the preceding claims, wherein the distance between adjoining second parts (49) of each strip (44, 45) is less than 40 mm, preferably less than 30 mm, such as 20 mm or even less.

9. Vehicle according to one or more of the preceding claims, wherein the intermediate space (9) between the strips (44, 45) of the or each pair (43) of mutually parallel strips (44, 45) is formed by an air gap which is preferably at least 10 mm wide.

10. Vehicle according to one or more of the preceding claims, wherein the vehicle (10) is autonomous.

11. Vehicle according to one of the preceding claims, wherein the vehicle (10) is configured to push feed in the direction of a feeding fence (31) in an animal shed (8) and/or for the automatic feeding of animals (9).

12. System for performing an animal-related operation, comprising:
- a shed space (3) for keeping animals (9), which shed space (3) comprises a feeding fence (31),
- a feeding alley (30) which extends along the feeding fence (31) on the side of the feeding fence (31) which is situated opposite the shed space (3),
- a vehicle (10) according to one or more of the preceding claims.

13. Method for performing an animal-related operation, comprising emitting an electrical shock to an animal (9) which comes into contact with the or each pair (43) of mutually parallel strips (44, 45) of the shock device of a vehicle (10) according to one or more of the preceding claims.

## Patentansprüche

1. Fahrzeug zum Ausführen eines tierbezogenen Vorgangs, insbesondere zur Verwendung mit Kühen, wobei das Fahrzeug (10) durch eine Außenseite (41) begrenzt ist und wobei das Fahrzeug (10) eine Elektroschockvorrichtung (47) umfasst, um einen Elektroschock an ein Tier (9) abzugeben, wobei die Schockvorrichtung Folgendes umfasst:
- mindestens ein Paar (43) länglicher, elektrisch leitfähiger Streifen (44, 45), die im Wesentlichen parallel zueinander verlaufen, um einen elektrisch isolierenden Zwischenraum (46) dazwischen freizulassen, und die sich zumindest entlang eines Abschnitts der Außenseite (41) des Fahrzeugs (10) erstrecken, wobei die Streifen (44, 45) des oder jedes Paars (43) zueinander paralleler Streifen (44, 45) jeweils eine Form aufweisen, die erste Teile (48) umfasst, die sich in eine erste Richtung erstrecken, die der Längsrichtung der länglichen, zueinander parallelen Streifen (44, 45) entspricht, und zweite Teile (49) umfasst, die sich quer, vorzugsweise im Wesentlichen senkrecht, in Bezug zur ersten Richtung erstrecken, und
- eine elektrische Spannungsquelle (47), die derart mit den Streifen (44, 45) elektrisch verbunden ist, dass ein elektrisch geschlossener Stromkreis ausgebildet wird, wenn die Streifen (44, 45) über den Zwischenraum (46) elektrisch verbunden werden, zum Beispiel, wenn beide Streifen (44, 45) von einem Tier (9) berührt werden,
wobei das Paar (43) zueinander paralleler Streifen (44, 45) vom Boden entfernt darüber angeordnet ist,
**dadurch gekennzeichnet, dass** sich die Streifen (44, 45) im Wesentlichen übereinander erstrecken und wobei die Streifen (44, 45) im Querschnitt betrachtet jeweils einen oberen Abschnitt (50) mit einer im Wesentlichen vertikalen Kontaktfläche (50a), die nach außen gewandt ist, und einen unteren Abschnitt (51) mit einer im Wesentlichen horizontalen Kontaktfläche (51a), die nach unten gewandt ist, aufweisen und wobei sich der untere Abschnitt (51) jedes Streifens (44, 45) in Bezug zum oberen Abschnitt (50) des Streifens (44, 45) nach innen erstreckt.

2. Fahrzeug nach Anspruch 1, wobei sich das Paar (43) zueinander paralleler Streifen (44, 45) im Wesentlichen horizontal auf der Außenseite (41) des Fahrzeugs (10) erstreckt.

3. Fahrzeug nach Anspruch 1 oder 2, wobei das Paar (43) zueinander paralleler Streifen (44, 45) an einer elektrisch leitfähigen, geerdeten Komponente des Fahrzeugs (10) montiert ist und wobei sich die Streifen (44, 45) im Wesentlichen übereinander erstrecken und wobei die elektrische Spannungsquelle (47) eine Kathode (47a) und eine Anode (47b) aufweist, wobei die Anode (47b) mit dem unteren Streifen (44) elektrisch verbunden ist und die Kathode (47a) mit dem oberen Streifen (45) elektrisch verbunden ist.

4. Fahrzeug nach einem oder mehreren der vorstehenden Ansprüche, wobei die Schockvorrichtung mit mehreren Paaren (43) länglicher, elektrisch leitfähiger Streifen (44, 45) versehen ist, die im Wesentlichen parallel zueinander verlaufen, um einen elektrisch isolierenden Zwischenraum (46) dazwischen freizulassen, und wobei sich jedes Paar (43) zueinander paralleler Streifen (44, 45) zumindest entlang eines Abschnitts der Außenseite (41) des Fahrzeugs (10) erstreckt, und wobei die elektrische Spannungsquelle (47) derart mit jedem Paar (43) zueinander paralleler Streifen (44, 45) elektrisch verbunden ist, dass ein elektrisch geschlossener Stromkreislauf ausgebildet wird, wenn die Streifen (44, 45) über den Zwischenraum (46) elektrisch verbunden sind, zum Beispiel wenn die Streifen (44, 45) von einem Tier (9) berührt werden.

5. Fahrzeug nach Anspruch 4, wobei die Paare (43) zueinander paralleler Streifen (44, 45) derart an der Außenseite (41) des Fahrzeugs (10) angeordnet sind, dass sich die Paare (43) zueinander paralleler Streifen (44, 45) zusammen im Wesentlichen vollständig von einer Vorderseite zu einer Rückseite des Fahrzeugs (10) erstrecken.

6. Fahrzeug nach Anspruch 4 oder 5, wobei die Schockvorrichtung mindestens ein Paar (43) zueinander paralleler Streifen (44, 45) umfasst, das sich im Wesentlichen vertikal auf der Außenseite (41) des Fahrzeugs (10) erstreckt.

7. Fahrzeug nach einem oder mehreren der vorstehenden Ansprüche, wobei die Streifen (44, 45) des oder jedes Paars (43) zueinander paralleler Streifen (44, 45) im Wesentlichen blockförmig sind.

8. Fahrzeug nach einem oder mehreren der vorstehenden Ansprüche, wobei die Entfernung zwischen angrenzenden zweiten Teilen (49) jedes Streifens (44, 45) weniger als 40 mm, vorzugsweise weniger als 30 mm, zum Beispiel 20 mm oder noch weniger beträgt.

9. Fahrzeug nach einem oder mehreren der vorstehenden Ansprüche, wobei der Zwischenraum (9) zwischen den Streifen (44, 45) des oder jedes Paars (43) zueinander paralleler Streifen (44, 45) durch einen Luftspalt ausgebildet ist, der vorzugsweise mindestens 10 mm breit ist.

10. Fahrzeug nach einem oder mehreren der vorstehenden Ansprüche, wobei das Fahrzeug (10) autonom ist.

11. Fahrzeug nach einem der vorstehenden Ansprüche, wobei das Fahrzeug (10) dazu ausgelegt ist, Futter in Richtung eines Fressgitters (31) in einem Tierstall (8) zu schieben und/oder für die automatische Fütterung von Tieren (9) ausgelegt ist.

12. System zum Ausführen eines tierbezogenen Vorgangs, Folgendes umfassend:
- einen Stallraum (3) zum Halten von Tieren (9), wobei der Stallraum (3) ein Fressgitter (31) umfasst,
- einen Fütterungsgang (30), der sich entlang des Fressgitters (31) auf der Seite des Fressgitters (31), die dem Stallraum (3) entgegengesetzt ist, erstreckt,
- ein Fahrzeug (10) nach einem oder mehreren der vorstehenden Ansprüche.

13. Verfahren zum Ausführen eines tierbezogenen Vorgangs, umfassend Abgeben eines Elektroschocks an ein Tier (9), welches das oder jedes Paar (43) zueinander paralleler Streifen (44, 45) der Schockvorrichtung eines Fahrzeugs (10) nach einem oder mehreren der vorstehenden Ansprüche berührt.

## Revendications

1. Véhicule pour réaliser une action relative à un animal, en particulier destiné à être utilisé avec des vaches, le véhicule (10) étant délimité par un côté extérieur (41), et le véhicule (10) comprenant un dispositif d'électrochoc (47) servant à produire un électrochoc sur un animal (9), le dispositif d'électrochoc comprenant :
au moins une paire (43) de bandes (44, 45) électroconductrices allongées qui sont sensiblement parallèles l'une à l'autre de sorte à laisser libre un espace intermédiaire (46) électriquement isolant entre elles et qui s'étendent au moins le long d'une partie du côté extérieur (41) du véhicule (10), les bandes (44, 45) de la ou de chaque paire (43) de bandes (44, 45) parallèles entre elles ayant chacune une forme comprenant des premières parties (48) qui s'étendent dans une première direction qui correspond à la direction longitudinale des bandes (44, 45) allongées parallèles entre elles, et comprenant des secondes parties (49) qui s'étendent transversalement, de préférence sensiblement perpendiculairement, par rapport à ladite première direction, et
une source de tension électrique (47) qui est connectée électriquement auxdites bandes (44, 45) de sorte qu'un circuit électriquement fermé soit formé lorsque lesdites bandes (44, 45) sont connectées électriquement à travers l'espace intermédiaire (46), comme lorsque les deux bandes (44, 45) sont touchées par un animal (9)
la paire (43) de bandes (44, 45) parallèles entre elles étant disposée à une certaine distance au-dessus d'un plancher,
**caractérisé en ce que** lesdites bandes (44, 45) s'étendent sensiblement au-dessus les unes des autres, et les bandes (44, 45), vues en coupe transversale, ayant chacune une partie supérieure (50) avec une surface de contact sensiblement verticale (50a), qui est orientée vers l'extérieur, et une partie inférieure (51) avec une surface de contact sensiblement horizontale (51a), qui est orientée vers le bas, et la partie inférieure (51) de chaque bande (44, 45) s'étendant vers l'intérieur par rapport à la partie supérieure (50) de ladite bande (44, 45) .

2. Véhicule selon la revendication 1, la paire (43) de bandes (44, 45) parallèles entre elles s'étendant sensiblement horizontalement sur le côté extérieur (41) du véhicule (10).

3. Véhicule selon la revendication 1 ou 2, la paire (43) de bandes (44, 45) parallèles entre elles étant fixée à un composant électroconducteur mis à la terre du véhicule (10), et lesdites bandes (44, 45) s'étendant sensiblement au-dessus les unes des autres, et la source de tension électrique (47) ayant une cathode (47a) et une anode (47b), l'anode (47b) étant connectée électriquement à la bande inférieure (44) et la cathode (47a) étant connectée électriquement à la bande supérieure (45).

4. Véhicule selon une ou plusieurs des revendications précédentes, le dispositif d'électrochoc étant pourvu d'une pluralité de paires (43) de bandes (44, 45) électroconductrices allongées, qui sont sensiblement parallèles entre elles de sorte à laisser libre un espace intermédiaire isolant (46) entre elles, et chaque paire (43) de bandes (44, 45) parallèles entre elles s'étendant au moins le long d'une partie du côté extérieur (41) du véhicule (10), et la source de tension électrique (47) étant connectée électriquement à chaque paire (43) de bandes (44, 45) parallèles entre elles de sorte qu'un circuit électriquement fermé soit formé lorsque lesdites bandes (44, 45) sont électriquement connectées à travers l'espace intermédiaire (46), comme lorsque lesdites bandes (44, 45) sont touchées par un animal (9).

5. Véhicule selon la revendication 4, les paires (43) de bandes (44, 45) parallèles entre elles étant disposées sur le côté extérieur (41) du véhicule (10) de sorte que lesdites paires (43) de bandes (44, 45) parallèles entre elles s'étendent collectivement sensiblement complètement d'un côté avant à un côté arrière du véhicule (10).

6. Véhicule selon la revendication 4 ou 5, le dispositif d'électrochoc comprenant au moins une paire (43) de bandes (44, 45) parallèles entre elles qui s'étendent sensiblement verticalement sur le côté extérieur (41) du véhicule (10).

7. Véhicule selon une ou plusieurs des revendications précédentes, les bandes (44, 45) de la ou de chaque paire (43) de bandes (44, 45) parallèles entre elles étant chacune sensiblement en forme de bloc.

8. Véhicule selon une ou plusieurs des revendications précédentes, la distance entre des secondes parties (49) adjacentes de chaque bande (44, 45) étant inférieure à 40 mm, de préférence inférieure à 30 mm, par exemple 20 mm ou même moins.

9. Véhicule selon une ou plusieurs des revendications précédentes, l'espace intermédiaire (9) entre les bandes (44, 45) de la ou de chaque paire (43) de bandes (44, 45) parallèles entre elles étant formé par un intervalle qui a de préférence une largeur d'au moins 10 mm.

10. Véhicule selon une ou plusieurs des revendications précédentes, le véhicule (10) étant autonome.

11. Véhicule selon l'une des revendications précédentes, le véhicule (10) étant conçu pour pousser des aliments en direction d'un cornadis (31) dans un hangar à animaux (8) et/ou pour l'alimentation automatique des animaux (9).

12. Système pour réaliser une opération relative à un animal, comprenant :
un espace de hangar (3) pour l'élevage d'animaux (9), lequel espace de hangar (3) comprend un cornadis (31),
un couloir d'alimentation (30) qui s'étend le long du cornadis (31) sur le côté du cornadis (31) qui est situé à l'opposé de l'espace de hangar (3),
un véhicule (10) selon une ou plusieurs des revendications précédentes.

13. Procédé pour réaliser une opération relative à un animal, comprenant l'étape consistant à produire un électrochoc sur un animal (9) qui entre en contact avec la ou chaque paire (43) de bandes (44, 45) parallèles entre elles du dispositif d'électrochoc d'un véhicule (10) selon une ou plusieurs des revendications précédentes.
